# EUROPEAN PATENT APPLICATION

(11) **EP 4 582 965 A1**
(43) Date of publication of application: **09.07.2025**
(21) Application number: 23869764.3
(22) Date of filing: 25.06.2023
(51) Int. Cl.: G06F 13/42

(54) **FOLDABLE SCREEN SYSTEM AND SIGNAL TRANSMISSION METHOD**

(30) Priority: 27.09.2022 CN 202211185668
(71) Applicant: Huawei Technologies Co., Ltd., Shenzhen, Guangdong 518129 (CN)
(72) Inventor: YANG, Lvjian, Shenzhen, Guangdong 518129 (CN); JI, Weitian, Shenzhen, Guangdong 518129 (CN); ZHOU, Xin, Shenzhen, Guangdong 518129 (CN); CHANG, Lei, Shenzhen, Guangdong 518129 (CN); SHI, Wenming, Shenzhen, Guangdong 518129 (CN)
(74) Representative: Goddar, Heinz J.
(86) International application number: PCT/CN2023/102085
(87) International publication number: WO 2024/066516

(57) **Abstract**

Embodiments of this application relate to the field of chip technologies, and provide a foldable screen system and a signal transmission method, to reduce a quantity of through-shaft signals between a main board and a subboard by aggregating low-speed signals into a high-speed signal. **In** this way, a quantity of through-shaft FPCs for connecting the main board and the subboard is reduced, and design difficulty for a hinge and a rotating shaft opening is reduced. A specific solution is as follows: The foldable screen system includes a main board, a subboard, and a through-shaft flexible printed circuit FPC coupled between the main board and the subboard. A first die is disposed on the subboard. A first low-speed interface set and a first high-speed interface are disposed on the first die. The first low-speed interface set includes a plurality of low-speed interfaces. The first high-speed interface is coupled to a connector of the FPC on the subboard side. A second high-speed interface is disposed on the main board. The first die is configured to convert a first low-speed signal into a first high-speed signal, and convert a second high-speed signal into a second low-speed signal. Embodiments of this application are used during signal transmission between the main board and the subboard in the foldable screen system.

## Description

This application claims priority to Chinese Patent Application No. 202211185668.9, filed with the China National Intellectual Property Administration on September 27, 2022 and entitled "FOLDABLE SCREEN SYSTEM AND SIGNAL TRANSMISSION METHOD", which is incorporated herein by reference in its entirety.

### TECHNICAL FIELD

This application relates to the field of chip technologies, and in particular, to a foldable screen system and a signal transmission method.

### BACKGROUND

Currently, many mobile phones on the market are equipped with foldable screens. However, a foldable-screen mobile phone usually has a large thickness after folding, a large weight, and poor structural reliability, and a battery capacity of a foldable-screen mobile phone is similar to a battery capacity of a bar-type mobile phone, and so on. This affects user experience of a foldable-screen mobile phone user.

Many signals need to be connected between a main board (Main Board) and a subboard (SUB Board) of the foldable-screen mobile phone, and two flexible printed circuits (Flexible Printed Circuit, FPC) usually need to be used to implement signal connections. To reduce a thickness of the foldable-screen mobile phone, a sandwich board on the main board may be removed, and peripheral components on the main board are moved onto the subboard. However, this increases a quantity of signals that need to be connected between the main board and the subboard. In a parallel connection mode in a conventional foldable-screen mobile phone architecture, at least three or four FPCs are needed.

In addition, designs of a hinge and a rotating shaft opening at a joint in the foldable-screen mobile phone are complex, and costs are quite high. A larger quantity of FPCs leads to higher design difficulty for the hinge and the rotating shaft opening. The designs of the hinge and the rotating shaft opening are an important factor that affects overall structural reliability and waterproof and dustproof capabilities of the foldable-screen mobile phone.

### SUMMARY

Embodiments of this application provide a foldable screen system and a signal transmission method, to reduce a quantity of through-shaft signals between a main board and a subboard of a foldable screen system by aggregating low-speed signals into a high-speed signal for signal transmission between the main board and the subboard. In this way, a quantity of through-shaft FPCs for connecting the main board and the subboard is reduced, and design difficulty for a hinge and a rotating shaft opening is reduced.

To achieve the foregoing objective, the following technical solutions are used in embodiments of this application.

According to a first aspect, an embodiment of this application provides a foldable screen system. The foldable screen system includes a main board, a subboard, and an FPC coupled between the main board and the subboard. A first die is disposed on the subboard. A first low-speed interface set and a first high-speed interface are disposed on the first die. The first low-speed interface set includes a plurality of low-speed interfaces. The first high-speed interface is coupled to a connector of the FPC on the subboard side. A second high-speed interface is disposed on the main board. The first die is configured to convert a first low-speed signal of at least one low-speed interface in the first low-speed interface set into a first high-speed signal, and transmit the first high-speed signal to the second high-speed interface through the first high-speed interface and the FPC. The first die is further configured to receive, through the first high-speed interface, a second high-speed signal transmitted by the second high-speed interface, and convert the second high-speed signal into a second low-speed signal.

The first high-speed signal and the second high-speed signal are high-speed serial signals. The first low-speed signal and the second low-speed signal are low-speed parallel signals. The first die may convert a plurality of first low-speed signals into a first high-speed signal, or may convert a received second high-speed signal into a plurality of second low-speed signals. The first high-speed signal and the second high-speed signal, that is, high-speed serial signals, are transmitted between the main board and the subboard. This is equivalent to that a plurality of types of low-speed interfaces are integrated in the first die of the subboard in this application, and low-speed signals are aggregated by using a high-speed signal. Therefore, a degree of integration is high, and a few PCB area resources are occupied. In addition, when a plurality of types of low-speed interfaces are integrated in the first die, the first die has high scalability and flexibility, and may be adaptively changed with evolution of the foldable screen system.

Because a small quantity of signal lines is needed for a high-speed serial signal, one FPC is used in the foldable screen system to transmit a signal between the main board and the subboard. This reduces a quantity of through-shaft FPCs for connecting the main board and the subboard. In this way, design difficulty for a hinge and a rotating shaft opening that are related to the through-shaft FPC, overall costs, and power consumption can be reduced, and waterproof and dustproof performance and reliability of the foldable screen system can also be improved.

In a possible design, the main board includes a system on chip SoC, the SoC includes the second high-speed interface, and the second high-speed interface is coupled to a connector of the FPC on the main board side. To be specific, in this design, the second high-speed interface is disposed on the SoC. This is equivalent to that communication with the first high-speed interface on the first die is performed through the SoC.

In a possible design, the first die is a low-speed chip core, and both the first high-speed interface and the second high-speed interface are high-speed bus interfaces.

In this design, the low-speed interface chip core is highly integrated and occupies a small circuit area. In addition, the low-speed interface chip core is integrated with a low-speed interface IP, and therefore has high scalability and flexibility and can adapt to multi-generation foldable-screen mobile phone systems with evolution of the foldable-screen mobile phone system. One low-speed interface chip core is disposed on the subboard, and a signal is transmitted between the low-speed interface chip core and the SoC through a high-speed bus interface. This reduces a quantity of through-shaft signals between the main board and the subboard. In this way, a quantity of through-shaft FPCs for connecting the main board and the subboard is reduced, and design difficulty for a hinge and a rotating shaft opening is reduced. In addition, a signal is transmitted between the main board and the subboard through a high-speed bus interface, so that a signal transmission speed is increased.

In a possible design, a SoC and a second die are disposed on the main board. The second die includes the second high-speed interface and a second low-speed interface set. The second low-speed interface set includes a plurality of low-speed interfaces. The second low-speed interface set is coupled to a plurality of low-speed interfaces on the SoC. The second high-speed interface is coupled to a connector of the FPC on the main board side.

To be specific, in this design, the second die is disposed outside the SoC on the main board, and the first die is disposed on the subboard. The first die and the second die are completely invisible to the SoC. The first die and the second die are equivalent to common peripherals and only transparently transmit a signal. Therefore, flexibility of matching the SoC by the first die and the second die is high.

In a possible design, the second die is configured to receive, through the second high-speed interface, the first high-speed signal transmitted by the first die, convert the first high-speed signal into a third low-speed signal, and transmit the third low-speed signal to the SoC. The second die is further configured to convert a fourth low-speed signal received by at least one low-speed interface in the second low-speed interface set from the SoC into the second high-speed signal.

In a possible design, both the first die and the second die are serializer/deserializer chiplets, and both the first high-speed interface and the second high-speed interface are serial high-speed digital interfaces.

In this design, one serializer/deserializer chiplet is disposed on each of the main board and the subboard, and the serializer/deserializer chiplet may convert a low-speed signal into a high-speed signal and convert a high-speed signal into a low-speed signal. This reduces a quantity of through-shaft signals between the main board and the subboard. In this way, a quantity of through-shaft FPCs for connecting the main board and the subboard is reduced, and design difficulty for a hinge and a rotating shaft opening is reduced. In addition, a signal is transmitted between the main board and the subboard through a high-speed digital interface, so that a signal transmission speed is increased.

In a possible design, a low-speed interface in the first low-speed interface set includes at least one of a serial peripheral interface SPI, an inter-integrated circuit sound I2S, an inter-integrated circuit I2C, a general-purpose input/output GPIO, or a subscriber identity module SIM.

Certainly, this application is not limited to a signal class of the first low-speed signal, and may further include other types of low-speed signals, so that flexibility of integration is high.

In a possible design, when a low-speed interface in the first low-speed interface set is the SPI or the I2S, a data format of the first high-speed signal includes a start field, a transmission type field, a bus type field, a data field, a check field, and an end field; or when low-speed interfaces in the first low-speed interface set are the I2C, the GPIO, and the SIM, a data format of the first high-speed signal includes a start field, an I2C data field, a SIM data field, a GPIO data field, a check field, and an end field.

In this design, different signals are transmitted in different manners. For example, SPI and I2S signals without a requirement for real-time performance are transmitted through packaging, and I2C, GPIO, and SIM signals with a requirement for real-time performance are transmitted by using state blocks. This can meet different signal transmission requirements and improve signal transmission efficiency.

According to a second aspect, an embodiment of this application provides a signal transmission method, applied to a foldable screen system. The foldable screen system includes a main board, a subboard, and a through-shaft flexible printed circuit FPC coupled between the main board and the subboard. A first die is disposed on the subboard. A first low-speed interface set and a first high-speed interface are disposed on the first die. The first low-speed interface set includes a plurality of low-speed interfaces. The first high-speed interface is coupled to a connector of the FPC on the subboard side. A second high-speed interface is disposed on the main board. The method includes: The first die converts a first low-speed signal of at least one low-speed interface in the first low-speed interface set into a first high-speed signal, and transmits the first high-speed signal to the second high-speed interface through the first high-speed interface and the FPC. The first die receives, through the first high-speed interface, a second high-speed signal transmitted by the second high-speed interface, and converts the second high-speed signal into a second low-speed signal.

For benefits of the second aspect, refer to the descriptions of the first aspect.

In a possible design, the main board includes a system on chip SoC, the SoC includes the second high-speed interface, and the second high-speed interface is coupled to a connector of the FPC on the main board side.

In a possible design, the first die is a low-speed interface chip core, and both the first high-speed interface and the second high-speed interface are high-speed bus interfaces.

In a possible design, a SoC and a second die are disposed on the main board. The second die includes the second high-speed interface and a second low-speed interface set. The second low-speed interface set includes a plurality of low-speed interfaces. The second low-speed interface set is coupled to a plurality of low-speed interfaces on the SoC. The second high-speed interface is coupled to a connector of the FPC on the main board side.

In a possible design, the method further includes: The second die receives, through the second high-speed interface, the first high-speed signal transmitted by the first die, converts the first high-speed signal into a third low-speed signal, and transmits the third low-speed signal to the SoC. The second die further converts a fourth low-speed signal received by at least one low-speed interface in the second low-speed interface set from the SoC into the second high-speed signal.

In a possible design, both the first die and the second die are serializer/deserializer chiplets, and both the first high-speed interface and the second high-speed interface are serial high-speed digital interfaces.

In a possible design, a low-speed interface in the first low-speed interface set includes at least one of a serial peripheral interface SPI, an inter-integrated circuit sound I2S, an inter-integrated circuit I2C, a general-purpose input/output GPIO, or a subscriber identity module SIM.

In a possible design, when a low-speed interface in the first low-speed interface set is the SPI or the I2S, a data format of the first high-speed signal includes a start field, a transmission type field, a bus type field, a data field, a check field, and an end field; or when low-speed interfaces in the first low-speed interface set are the I2C, the GPIO, and the SIM, a data format of the first high-speed signal includes a start field, an I2C data field, a SIM data field, a GPIO data field, a check field, and an end field.

According to a third aspect, an embodiment of this application provides a computer-readable storage medium, including computer instructions. When the computer instructions are run on an electronic device, the electronic device is enabled to perform the method according to the second aspect.

These aspects or other aspects in this application are more concise and comprehensible in the following descriptions.

### BRIEF DESCRIPTION OF DRAWINGS

FIG. 1 is a diagram of an architecture of a connection between a main board and a subboard of a conventional foldable-screen mobile phone according to an embodiment of this application;
FIG. 2 is a diagram of a structure of a foldable screen system according to an embodiment of this application;
FIG. 3 is a diagram of a structure of a SoC according to an embodiment of this application;
FIG. 4 is a diagram of a structure of another foldable screen system according to an embodiment of this application;
FIG. 5 is a diagram of a structure of a high-speed bus interface according to an embodiment of this application;
FIG. 6 is a diagram of a structure of another foldable screen system according to an embodiment of this application;
FIG. 7 is a diagram of a structure of a high-speed digital interface according to an embodiment of this application;
FIG. 8 is a flowchart of a signal transmission method according to an embodiment of this application;
FIG. 9 is a flowchart of another signal transmission method according to an embodiment of this application; and
FIG. 10 is a diagram of a structure of an electronic device according to an embodiment of this application.

### DESCRIPTION OF EMBODIMENTS

For ease of understanding, some concepts related to embodiments of this application are described as examples for reference. Details are as follows:
Serial peripheral interface (Serial Peripheral interface, SPI): a high-speed, full-duplex, and synchronous communication bus. A communication mode of the SPI is a master/slave mode that includes one master device and one or more slave devices, and at least four lines are needed. The four lines are shared by all SPI-based devices, and include master device data input (Master Input Slave Output, MISO), master device data output (Master Output Slave Input, MOSI), clock (Serial Clock, SCLK), and chip select (Chip Select, CS). The MISO indicates data input of the master device and data output of the slave device. The MOSI indicates data output of the master device and data input of the slave device. A CS signal is a slave device enable signal, and is a control signal indicating whether the slave device is selected by the master device. An SCLK signal is a clock pulse provided by the master device. The MISO and the MOSI transmit data based on the clock pulse.

Inter-integrated circuit sound (Inter-IC Sound, I2S): a bus standard defined for audio data transmission between digital audio devices (such as a compact disc player, a digital sound effect processor, and a digital television sound system). An I2S bus cable includes three serial wires, including one time division multiplexing data line, one word selection line, and one clock line. A design in which a clock signal and a data signal are transmitted through independent wires is used for the I2S bus. The data signal is separated from the clock signal, to avoid distortion caused by a time difference.

Inter-integrated circuit (Inter-Integrated Circuit, I2C): a bus for connecting a microcontroller to a peripheral device of the microcontroller. The I2C bus includes two lines: serial data (Serial Data, SDA) and serial clock (Serial Clock, SCL). The SDA and the SCL transmit messages between components connected to the I2C bus. An address of each component connected to the bus may be set by using a unique address and simple master/slave relationship software that always exists. The master device may serve as a master transmitter or a master receiver.

General-purpose input/output (General-purpose input/output, GPIO): Some pins of a chip may be flexibly used by a user through a program. A pin may be used for general-purpose input (General-purpose input, GPI), general-purpose output (General-purpose output, GPO), or GPIO according to an actual requirement.

Subscriber identity module (Subscriber Identity Module, SIM): used for a global system for mobile communications (Global System for Mobile Communications, GSM) digital mobile phone. A chip of a SIM card stores information about a digital mobile phone subscriber, an encryption key, an address book of a user, and other content. The stored information may be used to authenticate an identity of a GSM network subscriber and encrypt voice information of the subscriber during a call.

Improved inter-integrated circuit (Improved Inter-Integrated Circuit, I3C): an improved bus for connecting a microcontroller to a peripheral device of the microcontroller. Compared with the I2C bus, the I3C bus may be used to connect more peripheral devices. In addition, no additional logic signal is added for supporting an interrupt or sleep mode. Interface usage of the I3C bus is similar to interface usage of the I2C bus. The I3C bus supports a plurality of types of devices, including a current master device, an auxiliary master device, an I3C slave device, and an I2C slave device. An I3C master device may dynamically allocate a 7-bit address to an I3C device and can also statically allocate an address to an I2C device. Therefore, the I3C bus is compatible with the I2C bus. In addition, power consumption of the I3C bus is reduced by one level compared with power consumption of the I2C bus, but an amount of transmission is increased by one order of magnitude.

Peripheral component interconnect express (Peripheral Component Interconnect Express, PCIe): a high-speed serial computer extension bus standard. The PCIe is high-speed serial point-to-point dual-channel transmission at high bandwidth. A connected device is allocated with exclusive channel bandwidth without sharing bus bandwidth. The PCIe mainly supports active power management, error reporting, end-to-end reliability transmission, hot swap, quality of service, and other functions.

Small computer system interface (Small Computer System Interface, SCSI): an interface for connecting a host to a peripheral device. The interface supports a variety of devices including a hard disk drive, a compact disc, and a scanner. A SCSI bus is a parallel bus with an advantage of wide applicability.

The following describes technical solutions in embodiments of this application with reference to accompanying drawings in embodiments of this application. In descriptions of embodiments of this application, "/" indicates "or", unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in descriptions of embodiments of this application, "a plurality of" means two or more.

The terms "first" and "second" used below are merely intended for a purpose of description, and shall not be understood as an indication or an implication of relative importance or an implicit indication of a quantity of indicated technical features. Therefore, a feature limited by "first" or "second" may explicitly or implicitly include one or more features. In descriptions of embodiments, "a plurality of" means two or more, unless otherwise specified.

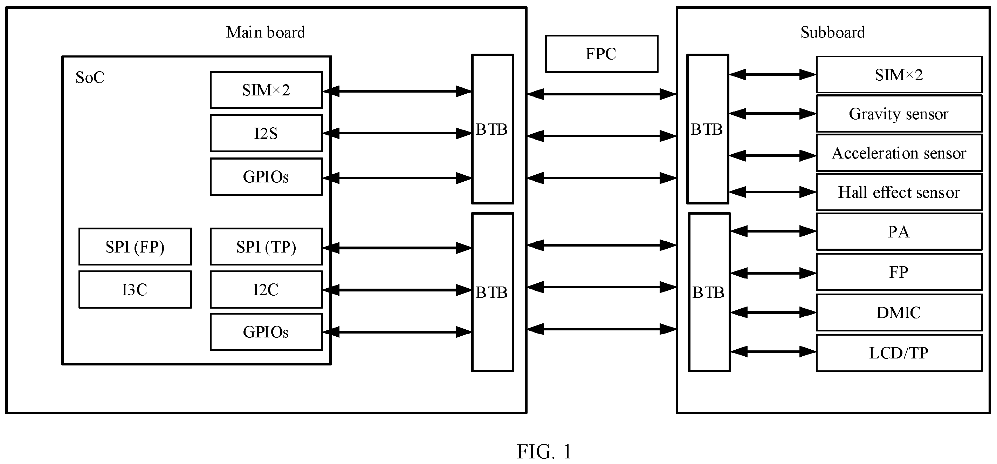

FIG. 1 is a diagram of an architecture of a connection between a main board and a subboard of a conventional foldable-screen mobile phone according to an embodiment of this application. System on chip (System On Chip, SoC) signals on the main board side pass through an FPC in parallel and connect to peripherals on the subboard side. Many peripherals are usually disposed on the subboard side, for example, a subscriber identity module (Subscriber Identity Module, SIM), a gravity sensor (Gravity sensor), an acceleration sensor (acceleration sensor), a Hall effect sensor (Hall effect sensor), a smart power amplifier (smart power amplifier, smartPA), a fingerprint (fingerprint, FP), a digital monolithic integrated circuit (Digital Monolithic Integrated Circuit, DMIC), a liquid crystal display (Liquid Crystal Display, LCD), and a touch panel (touch panel, TP). The main board controls the peripherals on the subboard by using various signals. A SoC on the main board includes control signals for primary and secondary SIM cards, an I2C bus, an I2S bus, an I3C bus, an SPI, and a plurality of GPIOs. The SIM cards are used as an example. There are six signals for the primary and secondary SIM cards. The six signals are coupled from the SoC on the main board to a board-to-board connector (board-to-board connector, BTB) on the main board side, and then pass through a through-shaft FPC in parallel and are coupled to a BTB on the subboard side, and then are coupled from the BTB to a SIM card slot on the subboard side.

In the parallel signal interconnection architecture shown in FIG. 1, at least two through-shaft FPCs are needed. Therefore, a conventional foldable-screen mobile phone has the following disadvantages: (1) A capacity of the foldable-screen mobile phone is limited. If quantities of through-shaft FPCs and BTBs increase, a battery capacity is reduced. (2) If a quantity of FPCs increases, hardware costs of the foldable-screen mobile phone increase. (3) Each through-shaft FPC needs to be configured with a corresponding rotating shaft opening. This increases design difficulty and design costs for a rotating shaft opening and a hinge, affects structural reliability of the foldable-screen mobile phone, and degrades waterproof and dustproof capabilities of the foldable-screen mobile phone.

This application provides a new foldable screen system. The foldable screen system includes a main board, a subboard, and an FPC coupled between the main board and the subboard. In embodiments of this application, low-speed signals may be aggregated into a high-speed signal, and the high-speed signal is transmitted between the main board and the subboard. A quantity of through-shaft FPCs used for transmitting the high-speed signal is less than a quantity of through-shaft FPCs used for directly transmitting a plurality of low-speed signals, so that a quantity of through-shaft signals between the main board and the subboard in the foldable screen system can be reduced. In this way, a quantity of through-shaft FPCs for connecting the main board and the subboard is reduced, design difficulty for a hinge and a rotating shaft opening that are related to the through-shaft FPC is reduced, and waterproof and dustproof performance and reliability of the foldable screen system are improved.

A foldable screen in this application is a flexible screen. In some embodiments, the foldable screen is formed by mounting a hinge between two screens, or may be two screens with a flip design. One screen includes a main board, and the other screen includes a subboard.

The foldable screen system in this application may be used for, for example, a mobile phone, head-mounted virtual reality (Virtual Reality, VR), a vacuum cleaner, and some medical devices.

Based on the descriptions of the foldable screen system provided in this application, the following further describes the foldable screen system provided in this application.

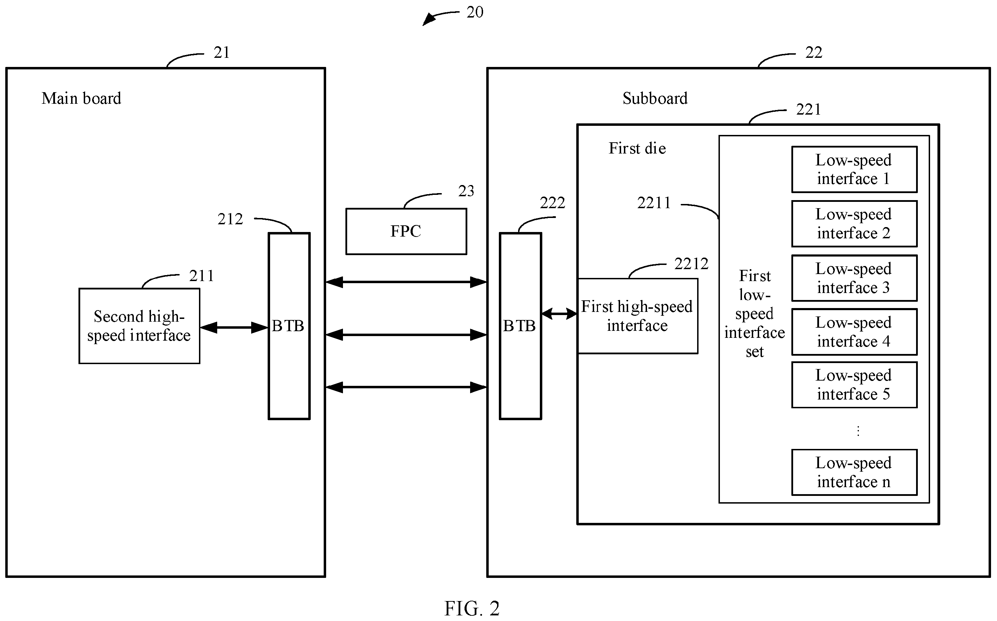

An embodiment of this application provides a foldable screen system 20. FIG. 2 is a diagram of a structure of a foldable screen system according to an embodiment of this application. The foldable screen system 20 includes a main board 21, a subboard 22, and an FPC 23 coupled between the main board 21 and the subboard 22. A first die 221 is disposed on the subboard 22. A first low-speed interface set 2211 and a first high-speed interface 2212 are disposed on the first die 221. The first low-speed interface set 2211 includes a plurality of low-speed interfaces. The first high-speed interface 2212 is coupled to a connector 222 of the FPC 23 on the subboard side. A second high-speed interface 211 is disposed on the main board 21.

For example, the plurality of low-speed interfaces are connection interfaces that are on the first die 221 and that are coupled to peripherals on the subboard 22, and include a low-speed interface 1, a low-speed interface 2, and a low-speed interface n. The peripherals coupled to the plurality of low-speed interfaces may include a SIM, a gravity sensor, an acceleration sensor, a Hall effect sensor, a smartPA, an FP, a DMIC, an LCD, a TP, and the like.

For example, when the low-speed interface 1 is an I2S, a peripheral coupled to the I2S is the smartPA, and the I2S is configured to receive an I2S signal transmitted by the peripheral smartPA.

The first die 221 is configured to convert a first low-speed signal of at least one low-speed interface in the first low-speed interface set 2211 into a first high-speed signal, and transmit the first high-speed signal to the second high-speed interface 211 through the first high-speed interface 2212 and the FPC 23. The first die 221 is further configured to receive, through the first high-speed interface 2212, a second high-speed signal transmitted by the second high-speed interface 211, and convert the second high-speed signal into a second low-speed signal.

For example, frequencies of the first high-speed signal and the second high-speed signal may range from 150 M to 200 M, and frequencies of the first low-speed signal and the second high-speed signal may be within 100 M. The first high-speed signal and the second high-speed signal are high-speed serial signals. The first low-speed signal and the second low-speed signal are low-speed parallel signals. In a high-speed serial signal, transmission is performed by bit. One-byte data is used as an example. In serial transmission, the one-byte data may be transmitted through a transmission line in an order from a least significant bit to a most significant bit. In a serial communication mode, a few signal lines are used, and communication costs can be reduced.

For example, the first die 221 may convert a plurality of first low-speed signals into a first high-speed signal, and the first die 221 may also convert a second high-speed signal into a plurality of second low-speed signals. A path of transmitting, by the subboard 22, a signal to the main board 21 is as follows: The first die 221 converts a plurality of first low-speed signals into a first high-speed signal, and transmits the first high-speed signal to the BTB 222 on the subboard side through the first high-speed interface 2212. Then the through-shaft FPC 23 transmits the first high-speed signal to a BTB 212 on the main board side in series. Then the BTB 212 on the main board side transmits the first high-speed signal to the second high-speed interface 211.

A path of transmitting, by the main board 21, a signal to the subboard 22 is as follows: A second high-speed signal is transmitted to the BTB 212 on the main board side through the second high-speed interface 211. Then the through-shaft FPC 23 transmits the second high-speed signal to the BTB 222 on the subboard side in series. Then the BTB 222 on the subboard side transmits the second high-speed signal to the first high-speed interface 2212 on the first die 221, and the first die 221 converts the second high-speed signal into a plurality of second low-speed signals.

Therefore, the FPC 23 between the main board 21 and the subboard 22 only needs to transmit the first high-speed signal and the second high-speed signal. In addition, a few signal lines are used for transmitting a high-speed signal, so that a quantity of through-shaft FPCs 23 for connecting the main board and the subboard is reduced, and design difficulty for a hinge and a rotating shaft opening that are related to the through-shaft FPC 23 is reduced.

Optionally, the main board 21 includes a system on chip SoC 210, the SoC 210 includes the second high-speed interface 211, and the second high-speed interface 211 is coupled to the connector 212 of the FPC 23 on the main board side.

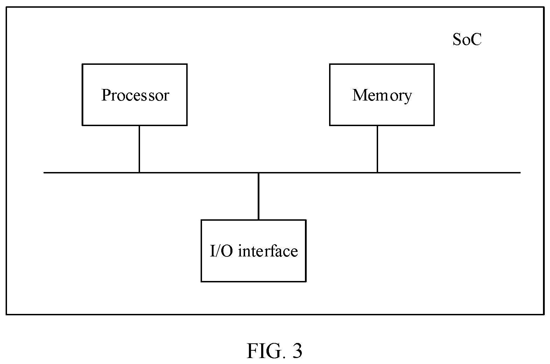

For example, FIG. 3 is a diagram of a structure of a SoC according to an embodiment of this application. The system on chip SoC 210 may include a processor, a memory, and an input/output (input/output, I/O) interface. The processor may be a single-core processor or a multi-core processor, a memory, an input/output interface, and the like. After loading data and an application in the memory, the processor may process the data, for example, process a high-speed signal in this application. For example, after the I/O interface receives the first high-speed signal from the second high-speed interface, the processor processes the first high-speed signal.

Optionally, the first die 221 is a low-speed interface chip core, and both the first high-speed interface 2212 and the second high-speed interface 211 are high-speed bus interfaces.

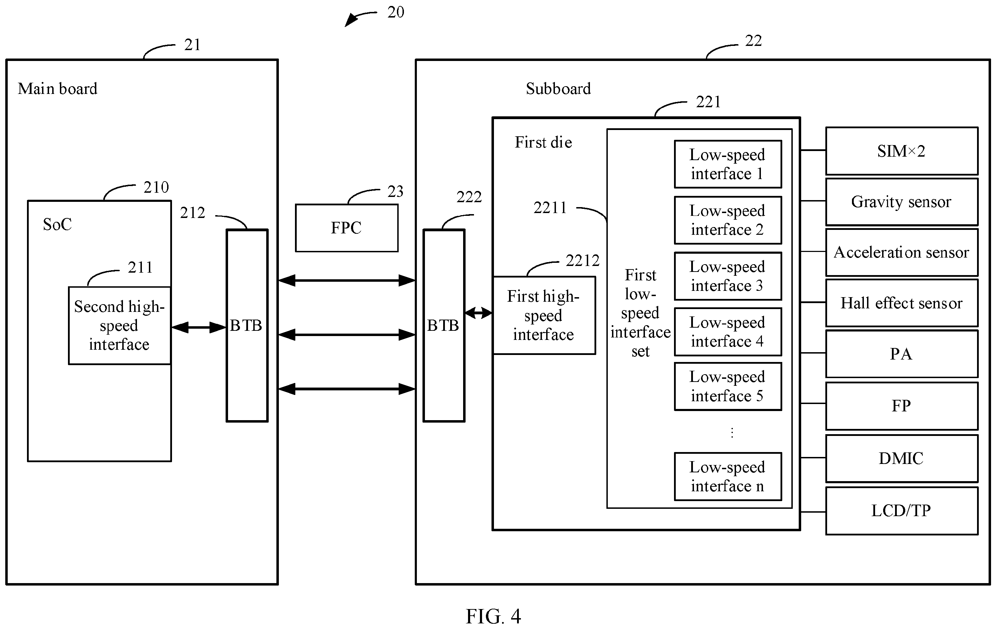

For example, FIG. 4 is a diagram of a structure of another foldable screen system according to an embodiment of this application. The first die 221 is a low-speed interface chip core that is highly integrated and occupies a small circuit area. The first die 221 is coupled to peripherals, such as a SIM, a gravity sensor, an acceleration sensor, a Hall effect sensor, a smartPA, an FP, a DMIC, and an LCD or a TP, through a plurality of low-speed interfaces. The low-speed interface chip core is integrated with a low-speed interface intellectual property core (intellectual property core, IP), and therefore has high scalability and flexibility and can adapt to multi-generation foldable-screen mobile phone systems with evolution of the foldable-screen mobile phone system. In this application, when one low-speed interface chip core is disposed on the subboard and a signal is transmitted between the low-speed interface chip core and the SoC 210 on the main board through a high-speed bus interface. This can reduce a quantity of through-shaft signals between the main board 21 and the subboard 22. In this way, a quantity of through-shaft FPCs 23 for connecting the main board and the subboard is reduced, and design difficulty for a hinge and a rotating shaft opening is reduced. In addition, a signal is transmitted between the main board 21 and the subboard 22 through a high-speed bus interface, so that a signal transmission speed is increased.

For example, the high-speed bus interface may be PCIe, or may be serial attached SCSI (Serial Attached SCSI, SAS), serial advanced technology attachment (Serial Advanced Technology Attachment, SATA), non-volatile memory express (Non-Volatile Memory Express, NVMe), or mini serial attached SCSI (mini Serial Attached SCSI, mini SAS). A type of the high-speed bus interface is not specifically limited herein.

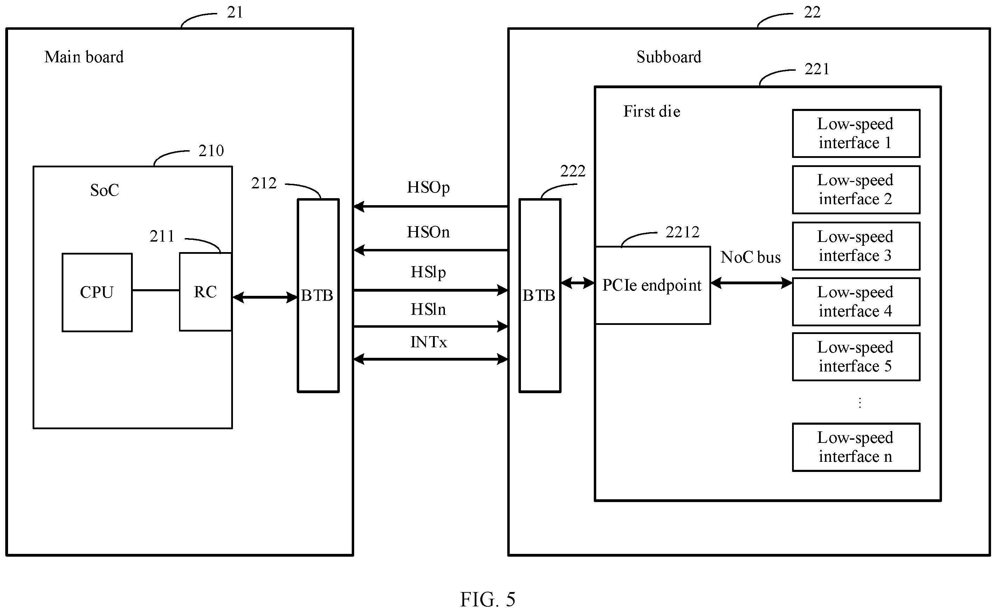

APCIe interface is used as an example. FIG. 5 is a diagram of a structure of coupling between a main board and a subboard through a PCIe interface according to an embodiment of this application. The PCIe interface includes a PCIe endpoint (Endpoint) and a root complex (Root Complex, RC). To be specific, the first high-speed interface 2212 may be a PCIe endpoint, and the second high-speed interface 211 may be a PCIe RC. The PCIe endpoint is coupled to a plurality of low-speed interfaces on the first die 221 through a QIC bus. The root complex is coupled to a central processing unit (Central Processing Unit, CPU) in the SoC.

In this way, low-speed signals transmitted by a plurality of low-speed interfaces on a second die may be converted into a high-speed signal through a network on chip (Network on Chip, NoC) bus and the PCIe endpoint, the high-speed signal is transmitted to the root complex on the first die, and then the root complex transmits a low-speed signal to the CPU for processing.

In some embodiments, a point-to-point communication channel is formed between the first high-speed interface 2212 and the second high-speed interface 211. The channel includes two pairs of differential signals. One pair of differential signals, for example, HSOp and HSOn, is used to receive data. The other pair of differential signals, for example, HSlp and HSln, is used to send data. The channel may further include an interrupt line, for example, INTx, which may be used to transmit an interrupt signal. The channel may further include a clock differential pair, for example, REFCLK+ and REFCLK- (not shown in FIG. 5).

In addition, the PCIe interface is implemented hierarchically, and includes a plurality of layers: an application layer, a transaction layer, a data link layer, and a physical layer from top to bottom. The application layer may be designed by a user according to a requirement.

In addition, in this application, the PCIe is used as a high-speed bus interface, and the following advantages are achieved: (1) After the PCIe completes data transmission, a data transmission request no longer continuously occupies a bus. (2) The PCIe is always in a working state, and neither the SoC 210 nor peripherals on the subboard 22 side need to apply for a bus control right. The PCIe may be requested to send data of the main board 21 or the subboard 22 at any time. The PCIe includes an internal data priority arbitration mechanism, and sends the data of the main board 21 or the subboard 22 in an order of priorities. (3) The PCIe uses differential serial transmission, so that a clock frequency is increased. In addition, a transmission rate is high, power consumption is low, and a small quantity of signals is needed. (4) No sideband signal needs to be used for transmission through the PCIe. Interrupt, error, and power management signals and the like have dedicated data, and data only needs to be transmitted to the SoC.

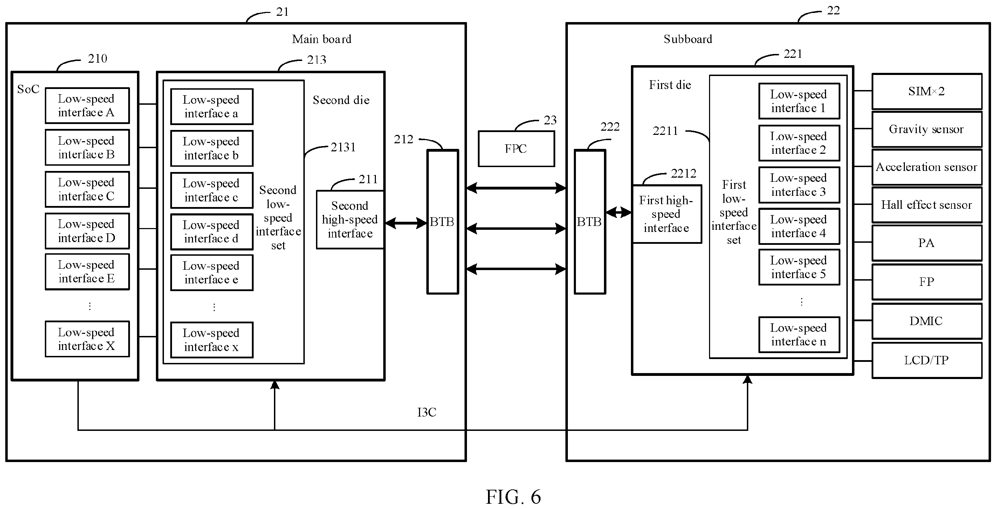

Optionally, FIG. 6 is a diagram of a structure of another foldable screen system according to an embodiment of this application. A SoC 210 and a second die 213 are disposed on the main board. The second die 213 includes a second high-speed interface 211 and a second low-speed interface set 2131. The second low-speed interface set 2131 includes a plurality of low-speed interfaces. The second low-speed interface set 2131 is coupled to a plurality of low-speed interfaces on the SoC 210. The second high-speed interface 211 is coupled to a connector 212 of the FPC 23 on the main board side.

For example, the second low-speed interface set 2131 may include a low-speed interface a, a low-speed interface b, ..., and a low-speed interface x, and the plurality of low-speed interfaces on the SoC include a low-speed interface A, a low-speed interface B, ..., and a low-speed interface X. The plurality of low-speed interfaces on the SoC 210 are coupled to the plurality of low-speed interfaces on the second die 213.

In addition, the SoC 210 may be further coupled to the first die 221 and the second die 213 through an I3C bus. Before signal transmission, the SoC 210 may deliver an initialization signal and a configuration signal to the first die 221 and the second die 213 through the I3C bus, to initialize and configure the first die 221 and the second die 213.

Optionally, the second die 213 is configured to receive, through the second high-speed interface 211, a first high-speed signal transmitted by the first die 221, convert the first high-speed signal into a third low-speed signal, and transmit the third low-speed signal to the SoC 210. The second die 213 is further configured to convert a fourth low-speed signal received by at least one low-speed interface in the second low-speed interface set 2131 from the SoC 210 into a second high-speed signal.

For example, the third low-speed signal and the fourth signal are low-speed parallel signals. A path of transmitting, by the subboard 22, a signal to the main board 21 is as follows: The first die 221 converts a plurality of first low-speed signals into a first high-speed signal, transmits the first high-speed signal to a BTB 222 on the subboard side through the first high-speed interface 2212. Then the through-shaft FPC 23 transmits the first high-speed signal to the BTB 212 on the main board side in series. Then the BTB 212 on the main board side transmits the first high-speed signal to the second high-speed interface 211 on the second die 213. The second die 213 converts the first high-speed signal into a plurality of third low-speed signals through multiplexing, and transmits the third low-speed signals to the SoC 210.

A path of transmitting, by the main board 21, a signal to the subboard 22 is as follows: The second die 213 converts a fourth low-speed signal received from the SoC 210 into a second high-speed signal, transmits the second high-speed signal to the BTB 212 on the main board side through the second high-speed interface 211. Then the through-shaft FPC 23 transmits the second high-speed signal to the BTB 222 on the subboard side in series. Then the BTB 222 on the subboard side transmits the second high-speed signal to the first high-speed interface 2212 on the first die 221, and the first die 221 converts the second high-speed signal into a plurality of second low-speed signals.

Optionally, in the foldable screen system shown in FIG. 6, both the first die 221 and the second die 213 are serializer/deserializer chiplets, and both the first high-speed interface 2212 and the second high-speed interface 211 are serial high-speed digital interfaces.

For example, the first high-speed interface 2212 and the second high-speed interface 211 may be low-voltage differential signaling (Low-Voltage Differential Signaling, LVDS) interfaces. LVDS is a level standard in which data is transmitted at a high speed in a differential mode with a quite low voltage swing to implement a point-to-point or point-to-multipoint connection. The LVDS is characterized by low power consumption, a low bit error rate, low crosstalk, low radiation, and the like.

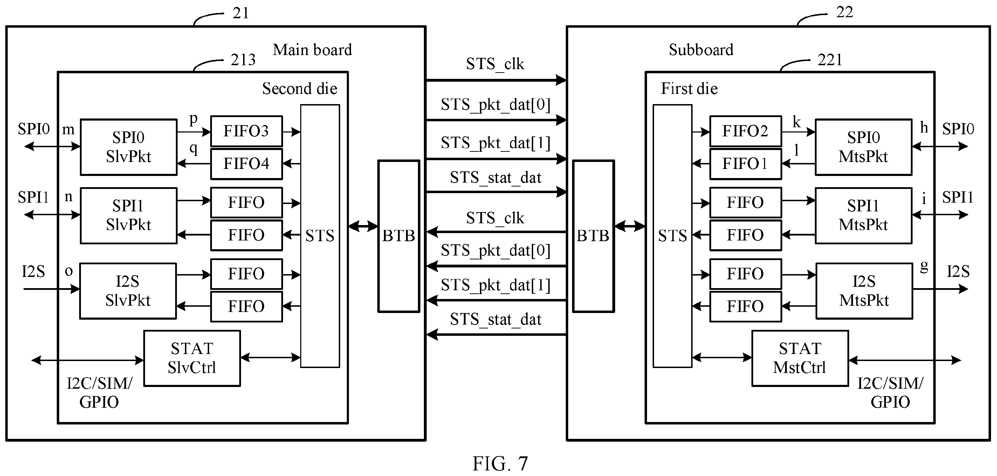

For example, the first high-speed interface 2212 and the second high-speed interface 211 may alternatively be serializer/deserializer-to-serializer/deserializer (SerDes-to-SerDes, STS) interfaces. FIG. 7 is a diagram of a structure of a high-speed digital interface according to an embodiment of this application. Second high-speed signals sent by the main board 21 to the subboard 22 include STS_clk, STS_pkt_dat[0], STS_pkt_dat[1], and STS_stat_dat. First high-speed signals sent by the subboard 22 to the main board 21 include STS_clk, STS_pkt_dat[0], STS_pkt_dat[1], and STS_stat_dat. To be specific, a half-duplex transmission mode is used for signal lines between the main board 21 and the subboard 22.

For example, SPIOMtsPkt, SPI1MtsPkt, and I2SMtsPkt are low-speed interfaces on the first die 221, where an end h of the SPIOMtsPkt is coupled to an SPIO, an end i of the SPI1MtsPkt is coupled to an SPI1, and an end g of the I2SMtsPkt is coupled to an I2S.

The SPIOMtsPkt is used as an example. An end k and an end l of the SPIOMtsPkt each are coupled to a first in first out (First In First Out, FIFO) queue. In a sending direction of the first die, when the SPIOMtsPkt receives a first low-speed signal from the SPIO, the first low-speed signal may be temporarily stored in a FIFO1, and then the first low-speed signal is converted into a first high-speed signal through an STS interface, and the first high-speed signal is transmitted to the main board 21. In a receiving direction of the first die, the STS interface converts a second high-speed signal into a second low-speed signal, the second low-speed signal may be temporarily stored in a FIFO2, and then the second low-speed signal is transmitted to the SPIOMtsPkt, and the SPIOMtsPkt transmits the second low-speed signal to a peripheral on the subboard 22 through the SPI0.

In FIG. 7, SPIOSlvPkt, SPI1SlvPkt, and I2SSlvPkt are low-speed interfaces on the second die 213, where an end m of the SPI0SlvPkt is coupled to an SPIO, an end n of the SPI1SlvPkt is coupled to an SPI1, and an end o of the I2SSlvPkt is coupled to an I2S. The SPI0SlvPkt is used as an example. An end p and an end q of the SPI0SlvPkt are coupled to a FIFO3 and a FIFO4 respectively. In a sending direction of the second die, when the SPI0SlvPkt receives a fourth low-speed signal from the SPIO, the fourth low-speed signal may be temporarily stored in the FIFO3, and then the fourth low-speed signal is converted into a second high-speed signal through an STS interface, and the second high-speed signal is transmitted to the main board 21. In a receiving direction of the second die, the STS interface converts a first high-speed signal into a third low-speed signal, the third low-speed signal may be temporarily stored in the FIFO4, and then the third low-speed signal is transmitted to the SPI0SlvPkt, and the SPI0SlvPkt transmits the third low-speed signal to the SoC 210 through the SPI0.

In addition, when an I2C, SIM, or GPIO signal on the subboard side is transmitted to STATMtsCtrl on the first die 221, the I2C, SIM, or GPIO signal may be converted into a first high-speed signal through the STS interface, and the first high-speed signal is transmitted to the main board 21. When an I2C, SIM, or GPIO signal on the main board 21 side is transmitted to STATSlvCtrl on the second die 213, the I2C, SIM, or GPIO signal is converted into a second high-speed signal through the STS interface, and the second high-speed signal is transmitted to the subboard 22.

In some embodiments, the first die 221 and the second die 213 in FIG. 6 and FIG. 7 may be serializer/deserializer chiplets. The serializer/deserializer chiplets may multiplex a low-speed signal into a high-speed signal and demultiplex a high-speed signal into a low-speed signal. This reduces a quantity of through-shaft signals between the main board 21 and the subboard 22. In this way, a quantity of through-shaft FPCs 23 for connecting the main board and the subboard is reduced, and design difficulty for a hinge and a rotating shaft opening is reduced. In addition, a signal is transmitted between the main board 21 and the subboard 22 through a high-speed digital interface, so that a signal transmission speed is increased.

Optionally, a low-speed interface in the first low-speed interface set 2211 includes at least one of a serial peripheral interface SPI, an inter-integrated circuit sound I2S, an inter-integrated circuit I2C, a general-purpose input/output GPIO, or a subscriber identity module SIM.

In this way, in this application, the first die 221 and the second die 213 are completely invisible to the SoC 210, and the first die 221 and the second die 213 are equivalent to common peripherals and only transparently transmit a signal. Therefore, flexibility of matching the SoC 210 by the first die 221 and the second die 213 is high. In addition to the foregoing signals, first low-speed signals transmitted by low-speed interfaces in the first low-speed interface set 2211 may further include other signals.

Optionally, when a low-speed interface in the first low-speed interface set 2211 is the SPI or the I2S, a data format of the first high-speed signal includes a start field, a transmission type field, a bus type field, a data field, a check field, and an end field.

For example, when a low-speed interface on the first die 221 or the second die 213 is the SPI or the I2S, received data may be written into a FIFO by frame. When data is transmitted to a peer die through a high-speed digital interface, the peer die may perform reception and parsing in a form of entire-frame data.

As shown in FIG. 7, the first die 221 may receive, through receive signal lines STS_pkt_dat[0] and STS_pkt_dat[1], second high-speed signals sent by the second die 213, and the first die 221 may further send first high-speed signals to the second die 213 through transmit signal lines STS_pkt_dat[0] and STS_pkt_dat[1].

For example, a data format of the first high-speed signal may include a start field (Start bit, STB), a transmission type field (index), a bus type field (SPI0/SPI1 index), a data field (data), a check field (Parity bit), and an end field (End bit).

For example, an SPI is used to transmit a low-speed signal, and data sent from the main board 21 to the subboard 22 includes eight bits. A data format is shown in Table 1.

**Table 1 Data format of data transmitted through the SPI**

| STB | Index | SPI0/SPI1 index | Data0 | Data1 | Data2 | Data4 | Parity bit | End bit |
|---|---|---|---|---|---|---|---|---|
| 0 | 0 | 0 | x | x | x | x | P | END |
| 0 | 0 | 1 | x | x | x | x | P | END |

| | | | | | | | | |
|---|---|---|---|---|---|---|---|---|
| x, P, and END may be 0 or 1. | | | | | | | | |

The SPI0/SPI1 index may be used to distinguish between the SPI0 and the SPI1. If the SPI0/SPI1 index is 00 or 01, the SPI0 is used for signal transmission. If the SPI0/SPI1 index is 10 or 11, the SPI1 is used for signal transmission.

The index is used to indicate a transmission type of a frame, as shown in Table 2.

**Table 2 Corresponding transmission type**

| Index[1:0] | Corresponding transmission type |
|---|---|
| 2'b00 | SPI data frame |
| 2'b01 | SPI enable frame |
| 2'b10 | I2S data frame |
| 2'b11 | SIM clock disable frame |

Optionally, when first low-speed signals transmitted by low-speed interfaces in the first low-speed interface set 2211 are the I2C, the GPIO, and the SIM, a data format of the first high-speed signal includes a start field, an I2C data field, a SIM data field, a GPIO data field, a check field, and an end field.

For example, the I2C signal, the GPIO signal, and the SIM signal are state block signals. These signals need to transfer states in real time, and therefore have a specific requirement for real-time performance and cannot be implemented through data packaging. In this case, the subboard 22 may receive the second high-speed signal through a receive signal line STS_stat_dat, and send the first high-speed signal through a transmit signal line STS_stat_dat. Specific I2C, GPIO, and SIM interfaces may be enabled or disabled (enable/disable) during initialization configuration, and cannot be dynamically adjusted. When the I2C, the GPIO, and the SIM are all enabled, a data format of the first high-speed signal may be shown in Table 3.

**Table 3 Data format**

| STB | SCL | Data | SCL | Data | SCL | Data | SCL | Data | SCL | Data | RST | DATA |
|---|---|---|---|---|---|---|---|---|---|---|---|---|
| 0 | I2C0 | I2C0 | I2C1 | I2C1 | I2C2 | I2C2 | I2C3 | I2C3 | I2C4 | I2C4 | SIM0 | SIM0 |

**Table 3 (continued)**

| RST | DATA | Data | Data | Data | Data | | |
|---|---|---|---|---|---|---|---|
| SIM1 | SIM1 | GPIO0 | GPIO0 | GPIO0 | GPIO0 | P | END |

To sum up, in embodiments of this application, when a low-speed signal is transmitted between the main board and the subboard, the low-speed signal is converted into a high-speed signal for transmission. This can reduce a quantity of through-shaft FPCs between the main board and the subboard. To be specific, a quantity of rotating shaft openings are reduced, and overall reliability and structural strength of the foldable screen system can be improved. With one through-shaft FPC omitted, reliability of the foldable screen system is improved by 100 ppm, and overall waterproof and dustproof capabilities of the foldable screen system can also be improved.

In embodiments of this application, one FPC may be used alone, so that a circuit area occupied by a BTB connected to the FPC is reduced, and a battery capacity can be increased. A circuit area of a BTB connected to one FPC is equivalent to a battery capacity of approximately 150 mAh, power consumption of a low-speed interface IP chiplet is 40 mAh, and power consumption of a serializer/deserializer chiplet is 30 mAh. In the foldable screen system provided in embodiments of this application, a power consumption benefit of approximately 100 mAh is achieved.

In addition, in the foldable screen system provided in embodiments of this application, a quantity of through-shaft FPCs is reduced, design difficulty for a hinge and a rotating shaft opening that are related to the through-shaft FPC is reduced, and design costs and hardware costs of the hinge and the rotating shaft opening in the foldable screen system are reduced. Costs of one through-shaft FPC are 1.5 USD, and costs of a low-speed interface IP chiplet and costs of a serializer/deserializer chiplet are both 0.4 USD. Hardware costs are reduced by approximately 1 USD.

Table 4 shows a power consumption benefit and a cost benefit of the foldable screen system provided in embodiments of this application.

**Table 4 Power consumption benefit and cost benefit of the foldable screen system**

| Type | Chip power consumption | Power consumption benefit | Chip cost | Cost benefit |
|---|---|---|---|---|
| Low-speed interface IP chiplet | 40 mAh | 110 mAh | $0.4 | $1.1 |
| Two serializer/deserializer chiplets | 60 mAh | 90 mAh | $0.8 | $0.7 |

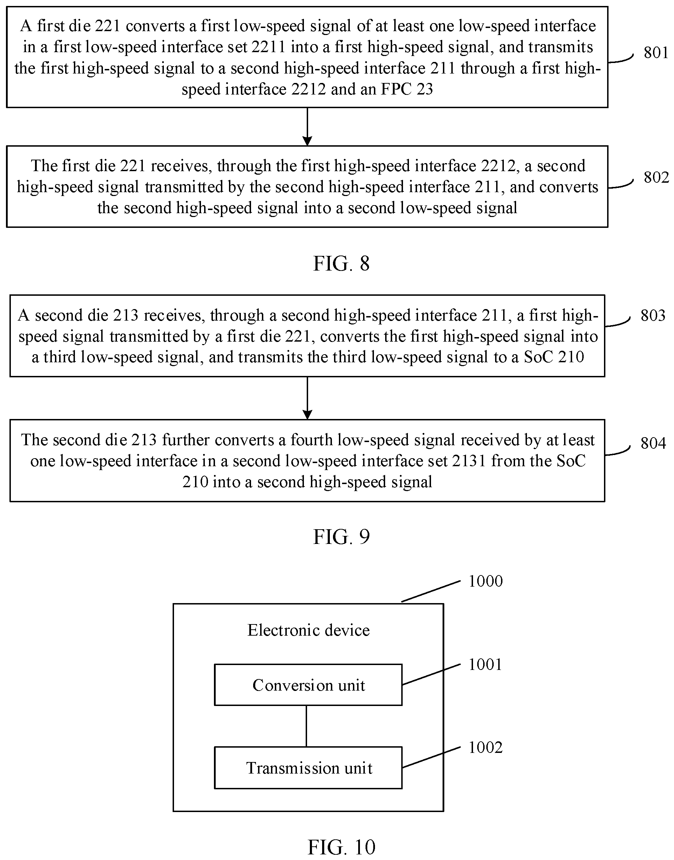

An embodiment of this application further provides a signal transmission method, applied to any one of the foldable screen systems in FIG. 2, FIG. 4, FIG. 6, and FIG. 7. FIG. 8 is a flowchart of a signal transmission method according to an embodiment of this application. The signal transmission method includes the following steps.

801: The first die 221 converts a first low-speed signal of at least one low-speed interface in the first low-speed interface set 2211 into a first high-speed signal, and transmits the first high-speed signal to the second high-speed interface 211 through the first high-speed interface 2212 and the FPC 23.

802: The first die 221 receives, through the first high-speed interface 2212, a second high-speed signal transmitted by the second high-speed interface 211, and converts the second high-speed signal into a second low-speed signal.

For example, the first high-speed signal and the second high-speed signal are high-speed serial signals. A quantity of signal lines used for transmitting a high-speed serial signal is less than a quantity of signal lines used for transmitting a low-speed parallel signal. The first die converts a plurality of first low-speed signals into a first high-speed signal, and converts a second high-speed signal into a first low-speed signal. Therefore, one FPC 23 may be used in the foldable screen system to transmit the first high-speed signal and the second high-speed signal between the main board 21 and the subboard 22. This reduces a quantity of through-shaft FPCs for connecting the main board 21 and the subboard 22. In this way, design difficulty for a hinge and a rotating shaft opening that are related to the through-shaft FPC, overall costs, and power consumption can be reduced, and waterproof and dustproof performance and reliability of the foldable screen system can also be improved.

FIG. 9 is a flowchart of another signal transmission method according to an embodiment of this application. The method is applied to the foldable screen systems in FIG. 6 and FIG. 7. The signal transmission method in this application further includes the following steps.

803: The second die 213 receives, through the second high-speed interface 211, a first high-speed signal transmitted by the first die 221, converts the first high-speed signal into a third low-speed signal, and transmits the third low-speed signal to the SoC 210.

804: The second die 213 further converts a fourth low-speed signal received by at least one low-speed interface in the second low-speed interface set 2131 from the SoC 210 into a second high-speed signal.

For example, the second die converts a second high-speed signal into a plurality of third low-speed signals, and converts a plurality of fourth low-speed signals into a second high-speed signal. One FPC 23 may be used in the foldable screen system to transmit the first high-speed signal and the second high-speed signal between the main board 21 and the subboard 22. This reduces a quantity of through-shaft FPCs for connecting the main board 21 and the subboard 22. In this way, design difficulty for a hinge and a rotating shaft opening that are related to the through-shaft FPC, overall costs, and power consumption can be reduced, and waterproof and dustproof performance and reliability of the foldable screen system can also be improved.

In embodiments, an electronic device may be divided into functional modules based on the foregoing method examples. For example, each functional module may be obtained through division based on each corresponding function, or two or more functions may be integrated into one processing module. The integrated module may be implemented in a form of hardware. It should be noted that division into the modules in embodiments is an example and is merely logical function division. During actual implementation, another division manner may be used.

When each functional module is obtained through division based on a corresponding function, FIG. 10 is a diagram of a possible composition of an electronic device 1000 in the foregoing embodiments. As shown in FIG. 10, the electronic device 1000 may include a conversion unit 1001 and a transmission unit 1002. The electronic device 1000 is, for example, the foldable screen system in this application.

The conversion unit 1001 may be configured to support the electronic device 1000 in performing step 801, step 802, step 803, step 804, and the like, and/or another process of the technology described in this specification.

The transmission unit 1002 may be configured to support the electronic device 1000 in performing step 802, step 803, and the like, and/or another process of the technology described in this specification.

It should be noted that all related content of the steps in the foregoing method embodiments may be cited in function descriptions of corresponding functional modules. Details are not described herein again.

An embodiment of this application further provides a computer storage medium. The computer storage medium stores computer instructions. When the computer instructions are run on an electronic device, the electronic device is enabled to perform the foregoing related method steps, to implement the signal transmission method in the foregoing embodiments.

Based on the descriptions of the foregoing implementations, a person skilled in the art may understand that, for a purpose of convenient and brief description, division into the foregoing functional modules is merely used as an example for illustration. During practical application, the foregoing functions may be allocated to different functional modules and implemented according to a requirement. In other words, an inner structure of an apparatus is divided into different functional modules to implement all or some of the functions described above.

In several embodiments provided in this application, it should be understood that the disclosed apparatus and method may be implemented in other manners. For example, the described apparatus embodiment is merely an example. For example, division into the modules or units is merely logical function division, and may be other division during actual implementation. For example, a plurality of units or components may be combined or may be integrated into another apparatus, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may be one or more physical units, to be specific, may be located in one place, or may be distributed in a plurality of different places. Some or all of the units may be selected according to actual requirements to achieve objectives of solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, technical solutions in embodiments of this application essentially, or a part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of steps of methods in embodiments of this application. The storage medium includes any medium that can store program code, for example, a USB flash drive, a removable hard disk, a read only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A foldable screen system, wherein the foldable screen system comprises a main board, a subboard, and a through-shaft flexible printed circuit FPC coupled between the main board and the subboard, a first die is disposed on the subboard, a first low-speed interface set and a first high-speed interface are disposed on the first die, the first low-speed interface set comprises a plurality of low-speed interfaces, the first high-speed interface is coupled to a connector of the FPC on the subboard side, and a second high-speed interface is disposed on the main board, wherein
the first die is configured to convert a first low-speed signal of at least one low-speed interface in the first low-speed interface set into a first high-speed signal, and transmit the first high-speed signal to the second high-speed interface through the first high-speed interface and the FPC; and
the first die is further configured to receive, through the first high-speed interface, a second high-speed signal transmitted by the second high-speed interface, and convert the second high-speed signal into a second low-speed signal.

2. The foldable screen system according to claim 1, wherein the main board comprises a system on chip SoC, the SoC comprises the second high-speed interface, and the second high-speed interface is coupled to a connector of the FPC on the main board side.

3. The foldable screen system according to claim 2, wherein the first die is a low-speed interface chip core, and both the first high-speed interface and the second high-speed interface are high-speed bus interfaces.

4. The foldable screen system according to claim 1, wherein a SoC and a second die are disposed on the main board;
the second die comprises the second high-speed interface and a second low-speed interface set, and the second low-speed interface set comprises a plurality of low-speed interfaces; and
the second low-speed interface set is coupled to a plurality of low-speed interfaces on the SoC, and the second high-speed interface is coupled to a connector of the FPC on the main board side.

5. The foldable screen system according to claim 4, wherein
the second die is configured to receive, through the second high-speed interface, the first high-speed signal transmitted by the first die, convert the first high-speed signal into a third low-speed signal, and transmit the third low-speed signal to the SoC; and
the second die is further configured to convert a fourth low-speed signal received by at least one low-speed interface in the second low-speed interface set from the SoC into the second high-speed signal.

6. The foldable screen system according to claim 5, wherein both the first die and the second die are serializer/deserializer chiplets, and both the first high-speed interface and the second high-speed interface are serial high-speed digital interfaces.

7. The foldable screen system according to any one of claims 1 to 6, wherein a low-speed interface in the first low-speed interface set comprises at least one of a serial peripheral interface SPI, an inter-integrated circuit sound I2S, an inter-integrated circuit I2C, a general-purpose input/output GPIO, or a subscriber identity module SIM.

8. The foldable screen system according to claim 7, wherein when a low-speed interface in the first low-speed interface set is the SPI or the I2S, a data format of the first high-speed signal comprises a start field, a transmission type field, a bus type field, a data field, a check field, and an end field; or when low-speed interfaces in the first low-speed interface set are the I2C, the GPIO, and the SIM, a data format of the first high-speed signal comprises a start field, an I2C data field, a SIM data field, a GPIO data field, a check field, and an end field.

9. A signal transmission method, applied to a foldable screen system, wherein the foldable screen system comprises a main board, a subboard, and a through-shaft flexible printed circuit FPC coupled between the main board and the subboard, a first die is disposed on the subboard, a first low-speed interface set and a first high-speed interface are disposed on the first die, the first low-speed interface set comprises a plurality of low-speed interfaces, the first high-speed interface is coupled to a connector of the FPC on the subboard side, a second high-speed interface is disposed on the main board, and the method comprises:
converting, by the first die, a first low-speed signal of at least one low-speed interface in the first low-speed interface set into a first high-speed signal, and transmitting the first high-speed signal to the second high-speed interface through the first high-speed interface and the FPC; and
receiving, by the first die through the first high-speed interface, a second high-speed signal transmitted by the second high-speed interface, and converting the second high-speed signal into a second low-speed signal.

10. The method according to claim 9, wherein the main board comprises a system on chip SoC, the SoC comprises the second high-speed interface, and the second high-speed interface is coupled to a connector of the FPC on the main board side.

11. The method according to claim 10, wherein the first die is a low-speed interface chip core, and both the first high-speed interface and the second high-speed interface are high-speed bus interfaces.

12. The method according to claim 9, wherein a SoC and a second die are disposed on the main board;
the second die comprises the second high-speed interface and a second low-speed interface set, and the second low-speed interface set comprises a plurality of low-speed interfaces; and
the second low-speed interface set is coupled to a plurality of low-speed interfaces on the SoC, and the second high-speed interface is coupled to a connector of the FPC on the main board side.

13. The method according to claim 12, wherein the method further comprises:
receiving, by the second die through the second high-speed interface, the first high-speed signal transmitted by the first die, converting the first high-speed signal into a third low-speed signal, and transmitting the third low-speed signal to the SoC; and
converting, by the second die, a fourth low-speed signal received by at least one low-speed interface in the second low-speed interface set from the SoC into the second high-speed signal.

14. The method according to claim 13, wherein both the first die and the second die are serializer/deserializer chiplets, and both the first high-speed interface and the second high-speed interface are serial high-speed digital interfaces.

15. The method according to any one of claims 9 to 14, wherein a low-speed interface in the first low-speed interface set comprises at least one of a serial peripheral interface SPI, an inter-integrated circuit sound I2S, an inter-integrated circuit I2C, a general-purpose input/output GPIO, or a subscriber identity module SIM.

16. The method according to claim 15, wherein when a low-speed interface in the first low-speed interface set is the SPI or the I2S, a data format of the first high-speed signal comprises a start field, a transmission type field, a bus type field, a data field, a check field, and an end field; or when low-speed interfaces in the first low-speed interface set are the I2C, the GPIO, and the SIM, a data format of the first high-speed signal comprises a start field, an I2C data field, a SIM data field, a GPIO data field, a check field, and an end field.

17. A computer-readable storage medium, comprising computer instructions, wherein when the computer instructions are run on an electronic device, the electronic device is enabled to perform the method according to any one of claims 9 to 16.
